# EUROPEAN PATENT APPLICATION

(11) **EP 2 540 357 A1**
(43) Date of publication of application: **02.01.2013**
(21) Application number: 12275086.2
(22) Date of filing: 01.06.2012
(51) Int. Cl.: A63F 13/00, A63F 13/10, A63F 13/12

(54) **Audio visual game system and computer implemented game method**

(30) Priority: 03.06.2011 GB 201109323
(71) Applicant: We R Interactive Limited, London W1T 2BU (GB)
(72) Inventor: Donnell, Neil, London, EC1R 5DW (GB); Rose, David, London, EC1R 5DW (GB)
(74) Representative: Exell, Jonathan Mark

(57) **Abstract**

An audio visual game system (10) and associated computer implemented method are disclosed. The system (10) comprises a data repository (20), a processor (30), an output module (40) and a user interface (50). The data repository (20) encodes caption data associated with audio-visual data, the caption data corresponding to at least a part of the audio data. The processor (30) is configured to execute computer program code to generate one or more omissions in the caption data and cause the caption data including the one or more omissions to be included in a rendering of the visual data to produce captioned visual data. The processor (30) is further configured to execute computer program code to cause output of the captioned visual data synchronised with the audio data to a user via the output module (40) and to receive a user input via the user interface (50) on the one or more omissions and award a score in dependence on said user input.

## Description

### FIELD OF THE INVENTION

The present invention relates to an audio visual game system and computer implemented game method. Preferred embodiments relate to an Internet based method and system for a video karaoke style game.

### BACKGROUND TO THE INVENTION

Karaoke entertainment has, for some time, been a popular entertainment trend. Until recently, this meant visiting a bar or the like to take part and gain access to the machinery needed to display lyrics whilst concurrently playing a corresponding backing track.

The evolution of home entertainment systems such as DVD players, games consoles and the like has meant that Karaoke can now be experienced in a user's home at very limited expenditure.

However, Karaoke is principally concerned with the social experience and other than demonstrating singing prowess offers little challenge. Additionally, Karaoke requires specifically produced media/data in order that the vocals are removed from the audio stream.

### SUMMARY OF THE INVENTION

According to an aspect of the present invention, there is provided an audio visual game system comprising:
a data repository, a processor, an output module and a user interface, the data repository encoding caption data associated with audio-visual data, the caption data corresponding to at least a part of the audio data, the processor being configured to execute computer program code to generate one or more omissions in the caption data and cause the caption data including the one or more omissions to be included in a rendering of the visual data to produce captioned visual data, the processor being further configured to execute computer program code to cause output of the captioned visual data synchronised with the audio data to a user via the output module, the processor being further configured to execute computer program code to receive a user input via the user interface on the one or more omissions and award a score in dependence on said user input.

The processor may be further configured to execute computer program code to cause output to said user a plurality of alternatives corresponding to the one or more omissions said output being timed in dependence on output of the captioned visual data, at least one of said alternatives comprising the omission from the caption data, wherein the user input includes a designation of one of said alternatives.

The output module may comprise an audio visual output system. The output module may be arranged to serve audio visual data to said user via a web server. The output module may comprise a web server.

The user interface may include an omission user interface control for displaying each of the plurality of alternatives, the processor being further configured to execute computer program code to cause output of the omission user interface control in the rendering of the visual data.

The processor may be configured to execute computer program code to measure a time remaining before the omission is output in the audio data and to calculate a score for a user input designating the omitted caption data in dependence on the measured time remaining.

The score may be calculated in dependence on a factor that is inversely proportional to the measured time remaining.

The data repository may encode a caption data file and a definition data file, the caption data file being time indexed and divided into caption groups comprising a plurality of captions, the time index corresponding to the audio visual data, the definition data file identifying a caption to be omitted for a caption group, wherein the computer program code to generate the one or more omissions in the caption data includes computer program code to access the caption data file and the definition data file to identify the caption group, the plurality of captions and the omission and to substitute the omission for the caption to be omitted.

The definition data file may identifies the plurality of alternatives corresponding to the omission, the processor being further configured to execute computer program code to generate the omission user interface control for the omission in dependence on the respective plurality of alternatives in the definition data file.

The processor may be configured to execute computer program code pre-render the omission user interface control for each of a predetermined number of the omissions.

According to another aspect of the present invention, there is provided a computer implemented game method comprising:
storing, in a data repository, caption data and definition data associated with audio-visual data, the caption data being time indexed and divided into caption groups comprising a plurality of captions, the time index corresponding to the audio visual data, the definition data identifying a caption to be omitted for a caption group;
executing, by a processor, computer program code for accessing the caption data and definition data and to render an image of each caption group excluding any captions to be omitted;
executing, by a processor, computer program code for including the rendered image for a caption group when rendering the associated visual data having a corresponding time index to the caption group;
executing, by a processor, computer program code for causing output of the audio data synchronised with the visual data;
executing, by a processor, computer program code for receiving a user input via a user interface on the one or more omissions and award a score in dependence on said user input.

The method may further comprise serving the audio visual data and said caption group image to said user via a web server.

The method may further comprise:
executing, by a processor, computer program code for outputting to said user a plurality of alternatives corresponding to the one or more omissions said output being timed in dependence on output of the captioned visual data, at least one of said alternatives comprising the omission from the caption data, wherein the user input includes a designation of one of said alternatives.

The user interface may include an omission user interface control for displaying each of the plurality of alternatives, the method further comprising executing, in a processor, computer program code for causing output of the omission user interface control in the rendering of the visual data.

The definition data may identify the plurality of alternatives corresponding to the omission, the method further comprising executing, in a processor, computer program code for generating the omission user interface control for the omission in dependence on the respective plurality of alternatives in the definition data file.

The method may further comprise pre-rendering the omission user interface control for each of a predetermined number of the omissions.

The method may further comprise the step of executing, in a processor, computer program code to measure a time remaining before the omission is output in the audio data and to calculate a score for a user input designating the omitted caption data in dependence on the measured time remaining.

In one embodiment, an audio visual game system comprises a data repository, a processor, an output module and a user interface, the data repository encoding associated audio, visual and caption data, the caption data corresponding to the audio data, the processor being arranged to generate one or more omissions in the caption data and overlay the caption data including the one or more omissions over at least part of a rendering of the visual data to produce captioned visual data, the processor being further arranged to output the captioned visual data synchronised with the audio data via the output module, the processor being arranged to receive a user input via the user interface on the one or more omissions and award a score in dependence on said user input.

Preferred embodiments are directed to Karaoke style games in which selected captions are omitted. A user interface enables a user to provide an input on the omission and the user is scored based on the input. For example, a number of options may be provided, the user may have to sing or say the correct answer etc. The user may also be scored based on timing such that a highest score may be provided if the selection is in time with the audio output, a lower score if the selection is before the audio output reaches the omitted caption and a lowest score if the selection is made after the audio output passes the omitted caption.

While preferred embodiments are directed to songs and the associated video typically produced by a recording artist, it will be appreciated that the audio-visual data need not be on such a subject and could be related to a film, television programme, nursery rhyme, story, lecture or the like.

In selected embodiments, the difficulty of omitted captions may be changed in dependence on score obtained. The manner in which the user can select caption options or otherwise enter their guess may also vary.

The user can optionally sing-along in the case of music videos but it will be appreciated that, unlike in Karaoke, a dedicated media stream in which vocals are removed need not be created for selected embodiments and a standard music video can be used.

It will be appreciated that selected embodiments may be configured for use with audience participation or performance (such as in a bar, as a TV show).

### Brief Description of the Drawings

Embodiments of the present invention will now be described by way of example only with reference to the accompanying drawings in which:
Figure 1 is a schematic diagram of a video game system according to an embodiment of the present invention;
Figure 2 is a schematic diagram illustrating aspects of the user interface provided by the output module in one embodiment;
Figure 3 is a schematic diagram of a game support system for use in creating content for the game system described in Figures 1 and 2;
Figure 4 is a screenshot of a user interface of a system used in conjunction with one embodiment;
Figures 5, 6 and 7 are illustrations of portions of a user interface provided by the system of Figure 3.

### Detailed Description

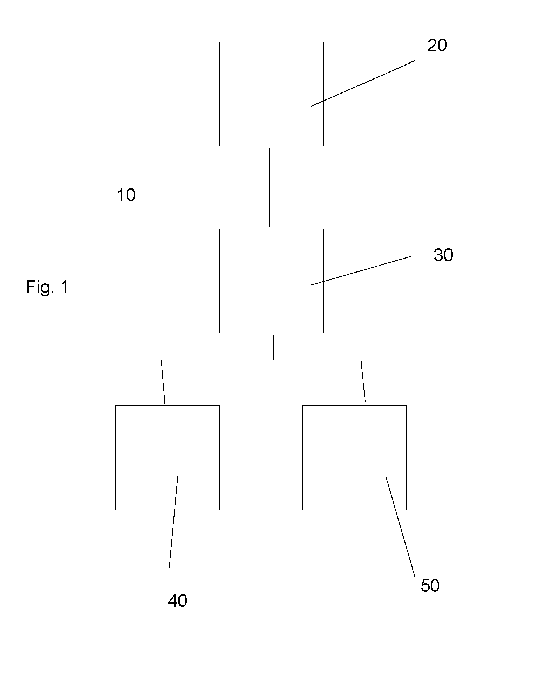

Figure 1 is a schematic diagram of an audio visual game system according to an embodiment of the present invention.

The audio visual game system 10 includes a data repository 20, a processor 30, an output module 40 and a user interface 50.

The data repository encodes associated audio visual data. For example, it may encode a music video for a song, a film and associated dialog, a spoken book and associated illustrations or the like. The data repository also encodes caption data that corresponds to the audio (and optionally the video) data. For example, the caption data may be subtitle style captions on the lyrics of the song. The data repository may be a single repository or a number of data repositories, optionally hosted by a number of different systems. For example, the video itself could be hosted by a music studio and streamed or otherwise provided by push or pull download to the game system or user device during game play.

During playing of the game, the processor 30 accesses the data repository to obtain the audio visual data and caption data and generates one or more omissions in the caption data. An omission may simply be the absence of the word or words in the caption data or their obfuscation or replacement with an omission placeholder such as a line. During rendering of the visual data for display, captions including the omissions from the caption data are overlaid on or otherwise integrated with at least part of a rendering of the visual data to produce captioned visual data.

The omissions may be determined randomly or predetermined. Options may be specified to be presented to the user to complete the omission and these may also be randomly generated, selected from a predetermined set or specified for a particular omission. Such data may be stored with or alongside the caption data. The processor outputs the captioned visual data synchronised with the audio data via the output module 40. The output module 40 may, for example, be an interface to a local display/speakers, an I/O interface or a web server in which content is served to a user console.

The captions may optionally be in some way highlighted as the audio-visual data reaches a point to which the caption corresponds (for example the singer sings the lyric corresponding to the caption then the caption may change colour, font, move etc.).

The processor is arranged to receive a user input via the user interface on the one or more omissions and award a score in dependence on said user input.

Although overlaying of captions onto rendering of the video is preferred, it will be appreciated that other implementations such as integrating captions into the video itself could be used as an alternative.

It will be appreciated that the manner of user input, scoring scheme and such factors can be varied based on the audio-visual data, difficulty level, game style or whim of designer.

For example, scores may be displayed on screen, a player seeing their score tick up with each correct answer. Bonus scores may also be included.

The various components need not be local to each other and could be implemented as a number of sub-components (for example as discussed above the data repository could be formed from multiple databases).

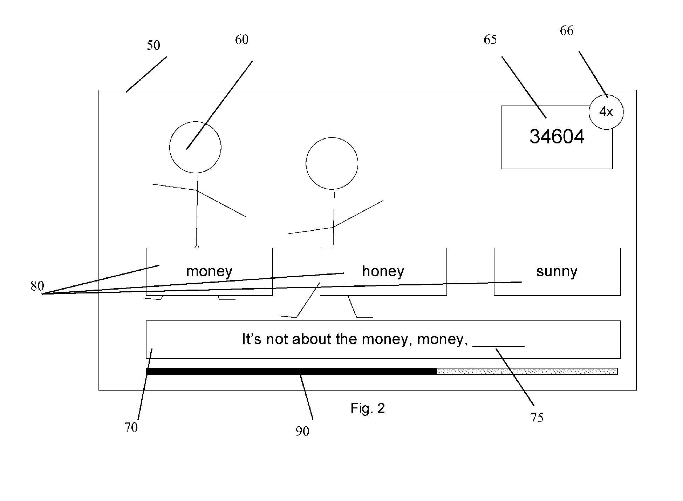

Figure 2 is a schematic diagram illustrating aspects of the user interface 50 provided by the output module 40 in one embodiment.

The user interface 50 includes a visual data display portion 60, a score display 65, a caption display portion 70, an omission user interface control 80 and a timer display portion 90. Score multipliers may be displayed in an associated multiplier display area 66.

During game play, the visual data and an associated audio data stream is output to the user, the visual data via the visual data display portion 60 and the audio data via speakers or similar output device at the user terminal. The timer display portion 90 is preferably updated as the visual data and audio data stream is output such that the position of the timer display portion 90 corresponds to position through the audio visual data. Optionally, the timer display portion 90 may be merged with the caption display portion 70 such that the captions change colour, appearance, position or undergo some other transition after being output. The current caption being output may also be displayed differently to other captions (so the current word may be bold, a different colour etc.).

The actual challenge presented to the user can be varied. In one embodiment, the user is rewarded for a correct guess by a score that substantially inversely proportional to the amount of time remaining before the omitted word. In this manner, timing can be made as important, of not more so, than guessing correctly. For example, a user making an early guess scores lower than a user making the same guess at approximately the same time as the timer display portion corresponds to the omitted word placeholder 75. Overshooting by making a guess the after the system has output portion of audio visual data corresponding to the placeholder for the omission may be arranged to cause transition to a game over phase; loss of a "life" for the player, zero scoring etc.

Example scoring schemes may include:
**Standard game -** Players select lyric as quickly as possible as it appears on the screen
   - Players earn 1000 points for successful selection
   - Players earn a x2 multiplier each time they get three answers in succession correct
   - Players earn an x 3 multiplier each time they get 5 answers in succession correct, an x5 multiplier for 10 answers, x10 for 20 answers etc.
**Timing game scoring -** Players click button as artist starts singing the missing word and clicks again at the end of the missing word or holds the button for the duration of the lyric
   - Scoring points as above but modified by accuracy of click
**Bonus scoring**
   - Perfect Run - final score modified by getting 100% correct
   - Pitch perfect - bonus for getting 100% across sections of the song e.g. chorus/verse/rap
      o This requires additional indicator notifying player that bonus is available
   - Hidden objects
      o Players can find hidden objects placed in some videos
      o Hidden objects are placed across the video timeline
      o Example:
         ■ Object 1 is between answers 5 and 10 - finding it earns 10000 bonus points
         ■ Object 2 is between answers 10 and 20 - finding it earns 25000 bonus points
         ■ Object 3 is between answers 20 and 25 - finding it earns 50000 bonus points
      o Hidden objects become progressively harder to spot
         ■ *Option: To maximise the bonus earned from finding a hidden object, players will need to have been 100% accurate in their selections to that point, unlocking the highest level of multiplier.*

### Example Scoring table

### Correct Answers Score Multiplier Subtotal Total Score

| | | | | |
|---|---|---|---|---|
| 1 | 1000 | 1 | 1000 | 1000 |
| 2 | 1000 | 1 | 1000 | 2000 |
| 3 | 1000 | 1 | 1000 | 3000 |
| 4 | 1000 | 2 | 2000 | 5000 |
| 5 | 1000 | 2 | 2000 | 7000 |
| 6 | 1000 | 3 | 3000 | 10000 |
| 7 | 1000 | 3 | 3000 | 13000 |
| 8 | 1000 | 3 | 3000 | 16000 |
| 9 | 1000 | 3 | 3000 | 19000 |
| 10 | 1000 | 3 | 3000 | 22000 |
| 11 | 1000 | 5 | 5000 | 27000 |
| 12 | 1000 | 5 | 5000 | 32000 |
| 13 | 1000 | 5 | 5000 | 37000 |
| 14 | 1000 | 5 | 5000 | 42000 |
| 15 | 1000 | 5 | 5000 | 47000 |
| 16 | 1000 | 5 | 5000 | 52000 |
| 17 | 1000 | 5 | 5000 | 57000 |
| 18 | 1000 | 5 | 5000 | 62000 |
| 19 | 1000 | 5 | 5000 | 67000 |
| 20 | 1000 | 5 | 5000 | 72000 |
| 21 | 1000 | 10 | 10000 | 82000 |
| 22 | 1000 | 10 | 10000 | 92000 |
| 23 | 1000 | 10 | 10000 | 102000 |
| 24 | 1000 | 10 | 10000 | 112000 |
| 25 | 1000 | 10 | 10000 | 122000 |
| 26 | 1000 | 10 | 10000 | 132000 |
| 27 | 1000 | 10 | 10000 | 142000 |
| 28 | 1000 | 10 | 10000 | 152000 |
| 29 | 1000 | 10 | 10000 | 162000 |
| 30 | 1000 | 10 | 10000 | 172000 |

Various layouts are possible and various mechanisms of showing progression through the lyrics and time remaining to guess (change of colour, making faint words darker as they are sung etc. Although the omissions are shown as buttons in this example, they could be other control types such as drop down menus, possibly hidden until close to when the omitted word, phrase or the like is due to be played in the video. The omissions may also be mobile on-screen or hidden and revealed when a mouse or other control passes over them. It may be that the omission options are not displayed at all and the user has to type a correct answer. In another alternative, the omission options may be associated with physical buttons or a separate touch screen that is remote of the user interface display (such as in an arcade machine).

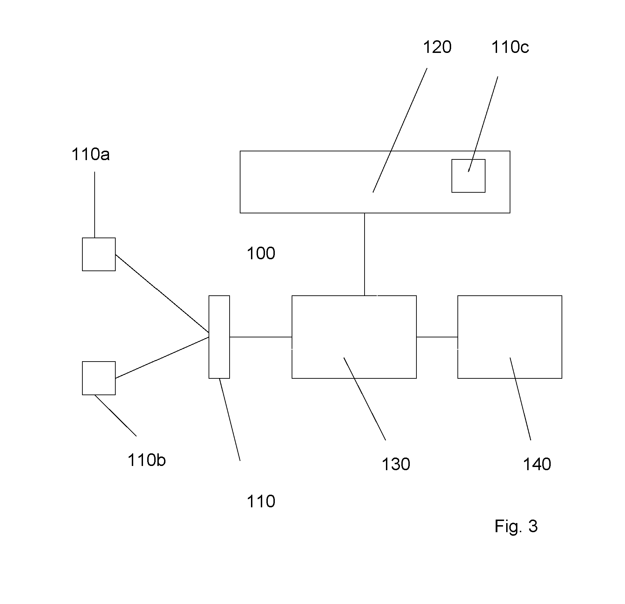

Figure 3 is a schematic diagram of a game support system for use in creating content for the game system described above.

The game support system 100 includes an input/output unit 110, a data repository 120, a processor 130 and a user interface 140.

Via the input/output unit 110, the game support system receives audio visual media data 110a (or a link to such data) and lyric data 110b that is linked to the audio visual data. For example, the lyric data 110b may be time indexed with respect to playback timing of the audio visual media data 110a. The lyric data may have been pre-prepared using a processing system such as Aegisub (details of which can be found at www.aegisub.org). In one embodiment, the game support system may be arranged to interface with a processing system to cause generation of subtitle data that is indexed to the audio visual data 110a. In another embodiment, the game support system may generate subtitle data that is indexed to the audio visual data 110a itself and use this as the lyric data 110b. Alternatively or in addition, a speech recognition component or similar may be applied at editing or at game time to correspond the timing of the caption data to the audio data.

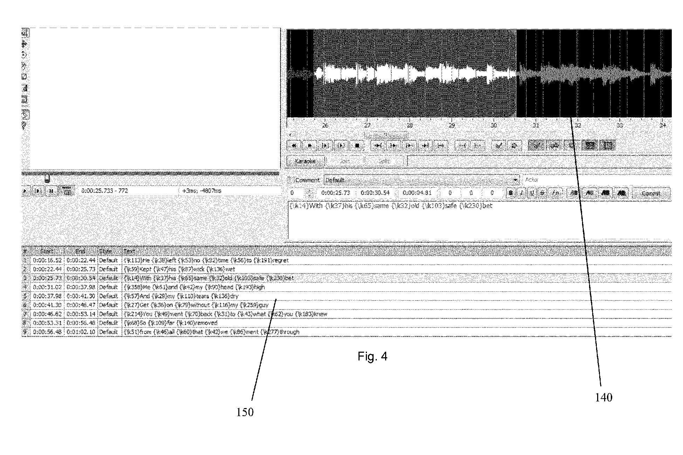

An example screenshot from the Aegisub system is shown in Figure 4. A representation of the audio signal is shown in one window 150 and portions of this can be selected and associated with text (lyrics, captions etc.) obtained from a text file in another window 160. The system provides as an output a text file in which the text lyrics etc. and their respective timings and time indices with respect to the media are listed.

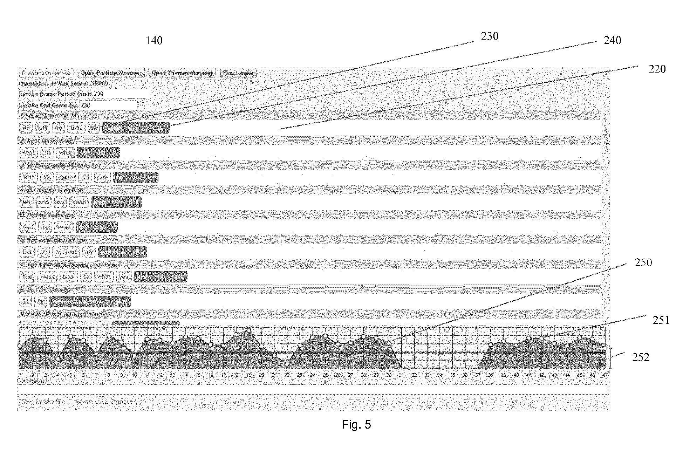

On receiving the audio visual data 110a (or link) and lyric data 110b, they are recorded in the data repository 120 and the processor 130 displays a representation in the user interface 140 as shown in Figure 5.

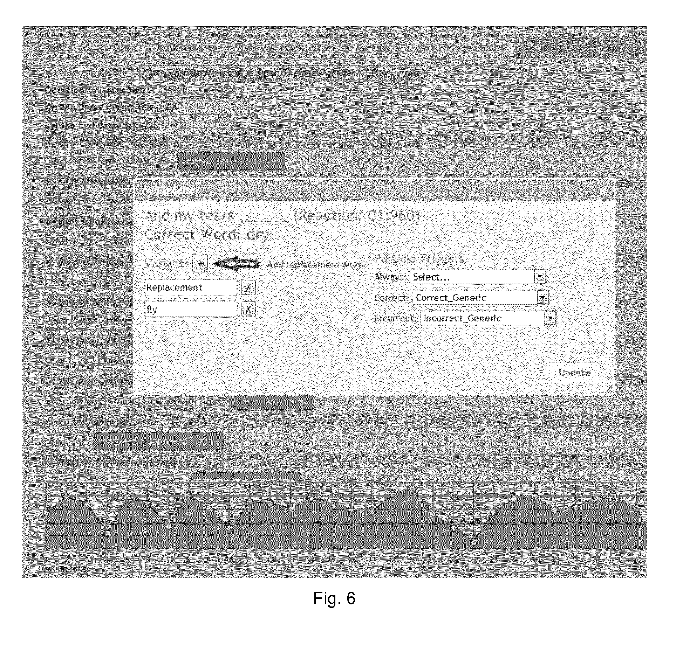

The user interface 140 separately lists each lyric line 220 (as identified in the lyric data 110b) and also segments each line into lyric words 230 (although it will be appreciated that in other embodiments it may be that paragraphs or other text portions are grouped together and lines or other subgroupings within those are available for selection). On selecting a lyric word, the user interface 140 presents a further dialog shown in Figure 6 enabling the user to designate the word as being one to be omitted during gameplay and the alternatives to be displayed alongside the correct word in the omission user interface control discussed above with reference to Figure 2. The dialog may also enable designation of congratulatory prompts, special bonuses etc. associated with correct answers. Where special scoring schemes are in place such as the timing scoring discussed above, these are also controllable via the dialog.

Once a word is designated as to be omitted, the user interface in Figure 5 changes the word representation in the lyric line to reflect this and also identify the alternatives. Although the omitted words 240 shown have all been selected as the final word in a line, it will be appreciated that any word in a line (or multiple words) can be selected for omission. Optionally, the user interface 140 includes a time indexed graph 250 showing the lyric lines over the duration of the audio visual piece represented by the audio visual data. In the illustrated graph, each circle 251 represents an omitted word and the height 252 of the graph at that point represents the reaction time given to the user from the point at which the lyric line would be displayed on screen to the time at which the user must have selected the correct omitted word before it is output during playback of the audio visual data.

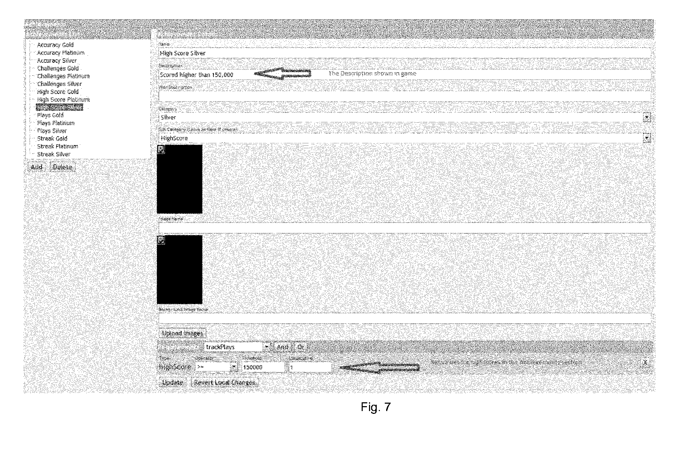

Achievements and other special features can be designated for a level or series of levels as shown in Figure 7.

On completion of designating omissions and alternatives, the user interface enables saving of the level as a definition file 110c in the data repository 120. Preferably, the definition file 110c can be reloaded into the user interface at a later date and re-edited. The definition file may include all lyric words including those to be omitted and their alternatives or it may include only the omissions and their alternatives with indexing data enabling cross referencing to the lyric data 110b. In another embodiment, the audio-visual data, lyric data and definition data may be combined into a single data structure or file enabling portability of the level and reducing risk that one of the data files is changed without the others being updated. Optionally, an identifier or other cross-reference to a file version and data may be included to link the version of audio visual data file, lyric file and definition file for integrity checking on level playback. The audio visual data file may be an MP4 file format, for example.

At game play time, the audio visual data file 110a, lyric data file 110b and definition file 110c are obtained by the processor 30. For each lyric line, omissions are identified from the definition file 110c and a graphical rendered image of the lyric line with omitted word placeholder 75 is created along with an appropriate omission user interface control populated with the correct omitted word and alternatives (which may be presented in a predetermined or random on-screen order). These are superimposed over the audio visual data as it is rendered to the user in the user interface 50 of the game system as discussed above.

It may be that rendering of the lyric lines is done in substantially real time or it may be pre-processed and held in the data repository 120 to reduce processing time and overhead at game play time. Alternatively, a moving window may be used to pre-render a predetermined number of lines (or lines spanning a predetermined time period).

It is to be appreciated that certain embodiments of the invention as discussed below may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although illustrated embodiments of the present invention have been described, it should be understood that various changes, substitutions, and alterations can be made by one of ordinary skill in the art without departing from the present invention which is defined by the recitations in the claims below and equivalents thereof.

The disclosures in United Kingdom patent application number 1109323.4, from which this application claims priority and in the abstract accompanying this application are incorporated herein by reference.

## Claims

1. An audio visual game system comprising:
a data repository, a processor, an output module and a user interface, the data repository encoding caption data associated with audio-visual data, the caption data corresponding to at least a part of the audio data, the processor being configured to execute computer program code to generate one or more omissions in the caption data and cause the caption data including the one or more omissions to be included in a rendering of the visual data to produce captioned visual data, the processor being further configured to execute computer program code to cause output of the captioned visual data synchronised with the audio data to a user via the output module, the processor being further configured to execute computer program code to receive a user input via the user interface on the one or more omissions and
award a score in dependence on said user input.

2. The audio visual game system of claim 1, wherein the processor is further configured to execute computer program code to cause output to said user a plurality of alternatives corresponding to the one or more omissions said output being timed in dependence on output of the captioned visual data, at least one of said alternatives comprising the omission from the caption data, wherein the user input includes a designation of one of said alternatives.

3. The audio visual game system of claim 1 or 2, wherein the output module comprises an audio visual output system.

4. The audio visual game system of claim 1 or 2, wherein the output module is arranged to serve audio visual data to said user via a web server.

5. The audio visual game system of claim 4, wherein the output module comprises a web server.

6. The audio visual game system of any of claims 2 to 5, wherein the user interface includes an omission user interface control for displaying each of the plurality of alternatives, the processor being further configured to execute computer program code to cause output of the omission user interface control in the rendering of the visual data.

7. The audio visual game system of any of claims 2 to 6, wherein the processor is configured to execute computer program code to measure a time remaining before the omission is output in the audio data and to calculate a score for a user input designating the omitted caption data in dependence on the measured time remaining.

8. The audio visual game system of claim 7, wherein the score is calculated in dependence on a factor that is inversely proportional to the measured time remaining.

9. The audio visual game system of claim 6, wherein the data repository encodes a caption data file and a definition data file, the caption data file being time indexed and divided into caption groups comprising a plurality of captions, the time index corresponding to the audio visual data, the definition data file identifying a caption to be omitted for a caption group, wherein the computer program code to generate the one or more omissions in the caption data includes computer program code to access the caption data file and the definition data file to identify the caption group, the plurality of captions and the omission and to substitute the omission for the caption to be omitted.

10. The audio visual game system of claim 9, wherein the definition data file identifies the plurality of alternatives corresponding to the omission, the processor being further configured to execute computer program code to generate the omission user interface control for the omission in dependence on the respective plurality of alternatives in the definition data file.

11. The audio visual game system of claim 10, wherein the processor is configured to execute computer program code pre-render the omission user interface control for each of a predetermined number of the omissions.

12. A computer implemented game method comprising:
storing, in a data repository, caption data and definition data associated with audio-visual data, the caption data being time indexed and divided into caption groups comprising a plurality of captions, the time index corresponding to the audio visual data, the definition data identifying a caption to be omitted for a caption group;
executing, by a processor, computer program code for accessing the caption data and definition data and to render an image of each caption group excluding any captions to be omitted;
including the rendered image for a caption group when rendering the associated visual data having a corresponding time index to the caption group;
causing output of the audio data synchronised with the visual data; and,
receiving a user input via a user interface on the one or more omissions and award a score in dependence on said user input.

13. The computer implemented game method of claim 12, further comprising serving the audio visual data and said caption group image to said user via a web server.

14. A computer program comprising computer program code means for performing all of the steps of any of claims 12 or 13 when said program is run on a computer.

15. The computer program of claim 14 embodied on a computer readable medium.
